# EUROPEAN PATENT SPECIFICATION

(11) **EP 2 965 152 B1**
(45) Date of publication and mention of the grant of the patent: **22.01.2020**
(21) Application number: 14712461.4
(22) Date of filing: 04.03.2014
(51) Int. Cl.: G03B 17/08, G03B 17/56, H04N 5/232, H04N 7/18, H04N 17/00

(54) **ALL WEATHER CAMERA SYSTEM AND METHODS FOR CONTROL THEREOF**
WETTERFESTES KAMERASYSTEM UND STEUERUNGSVERFAHREN
SYSTÈME DE CAMÉRA POUR TOUS LES TEMPS ET PROCÉDÉS POUR SA COMMANDE

(30) Priority: 04.03.2013 US 201361772004 P
(43) Date of publication of application: 13.01.2016
(73) Proprietor: Earthcam Inc., Hackensack, New Jersey 07838 (US)
(72) Inventor: CURY, Brian, Hackensack, New Jersey 07838 (US); NICOLL, James S., Kew Gardens, New York 11415 (US)
(74) Representative: Isarpatent
(86) International application number: PCT/US2014/020257
(87) International publication number: WO 2014/138039

(56) References cited:
- AU-A4- 2009 100 942
- JP-A- 2002 158 788
- US-A1- 2002 085 844
- US-A1- 2004 258 404
- US-A1- 2010 110 192

## Description

### Field of the Invention

The present invention relates to an all-weather camera system that monitors and provides digital images. More particularly, the present invention relates to an all-weather camera system and methods of controlling the camera system that provide video imaging and extremely high resolution composite imaging.

### Background of the Related Art

Cameras are used to remotely monitor and archive images and video in a variety of situations. Many of these cameras may be set in a location to provide around the clock monitoring. Cameras may be fitted into environmentally controlled enclosures as to be suitable for outdoor use. Robotic pan / tilt / zoom mechanisms may be used to provide remote aiming of the camera systems. The images produced by these cameras also may not be appropriate or applicable to high definition archival applications. If these cameras become disconnected or offline from the network, then the archived data may be lost or not retrievable. Most cameras used for remote motoring are video-enabled cameras. Most available high resolution archival cameras produce single fixed-position images.

The best way to capture high-resolution images is in the use of digital single-lens reflex (DSLR) camera technology because of the sensor size, but, because the lens is manual, there is no important zoom functionality. Conventional cameras may include a gigapan capability, but these cameras are not suitable for outdoor or continuous use. Special equipment and housing must be used to provide a panoramic capability with the high-resolution image capture. Such cameras are not "all-weather" or suitable for outdoor use. Further, they are not autonomous. An operator must be present, which is difficult for those locations that are remote, hazardous, or require an extended photographic term. For example, it would not be convenient or cost-effective to have an operator sit with such a camera on top of a tall building and provide daily photographs of a 3 year construction project. Further, if the camera system goes offline, then the data is lost.

The process of creating a gigapixel image involves stitching together multiple high-resolution images to produce one large high resolution image, which cannot be replicated by a camera with a wide angle lens that takes one wide shot. The camera not only needs to pan and tilt when it captures images, but it also needs to zoom in at small increments to take over hundreds (or more) closeups to be blended as layers of the gigapixel image. Thus, the lack of a remotely controlled zoom capability in the conventional cameras discussed above impedes the creation of such images at varying levels of resolution in an automated fashion without physically (manually) resetting the zoom level.

An example of all-weather camera system is disclosed in US 2010/0110192 A1.

### Summary of the Invention

The disclosed embodiments disclose an indoor/outdoor camera system having a tamper and impact resistant enclosure with an integrated camera and a heavy-duty robotic pedestal mounted on a fixed pole, wall, parapet, or a non-penetrating roof mount. The disclosed embodiments also include a platform for the camera and lens that provides these features. The disclosed camera system may take high-resolution 12, 16, 24, 32 or 64 megapixel digital images on a periodic basis (such as hourly, daily, weekly, or monthly) and also provide live video. For a panoramic image, the disclosed system captures a plurality of images in the correct sequence and uploads the images to servers over the connected network. A process or method may combine these high-resolution images with panorama stitching technology to create gigapixel images from the captured data.

The disclosed embodiments are not limited to these pixel counts, and include the appropriate high-resolution standards applicable to future camera systems. The disclosed system may incorporate other resolutions as well, and is not limited to these values.

The disclosed system uploads both still images and video over a wireless cellular modem, a wireless point-2-point system, or a hard wired connection to the Internet. The disclosed system also may provide a live stream of video on demand. The content is sent to a secure, password protected website or other IP-addressable location with an interface and online software features provided as a managed service. The disclosed system may take advantage of wireless communications technology to provide images and video to a remote network. The disclosed system may incorporate a mobile broadband service.

The disclosed system may operate within a range of 90-240 volt alternating current (AC) or 12 volt direct current (DC) and have a preferred power consumption of about 46 watts. The range of AC voltages allows the disclosed system to implement different input AC voltages. The disclosed system may also operate on solar power. The solar power may be collected and stored in a battery, or an array of batteries, coupled to the camera system.

The disclosed camera system provides live video, high definition images and multiple preset views in one package. The disclosed system may also include an optional washer and wiper system to keep the lens and lens window unobstructed under any conditions. The disclosed system also includes on-board backup data storage in the case of loss of connectivity. All of these features are provided on a platform that may be placed in most, if not all, locations.

Images and video from the disclosed system may provide private access for site monitoring, public access for marketing and promotion. The images also generate high definition cinematic panoramas, and high definition archives. The video may generate HD time-lapse movies. Preferably, the disclosed camera system can auto-generate 360° panoramas having over 1000 or more megapixels. Another feature is live streaming video preview featuring user controls and multiple presets. The disclosed camera system may take, and share, on-demand snapshots. The disclosed system also is capable of capturing high-definition (HD) quality 1080p or 720p video clips on demand and uploading this content for archival purposes.

The all-weather capabilities are enhanced by a lens wiper to ensure clear images. The disclosed camera system is built into in a corrosion-resistant black powder coated enclosure housing having a thermostatically regulated heater and fan. Control and operation processes are based on fast, dependable, solid state LINUX operating system and associated software.

The disclosed camera system also may include a solar power system that allows the system to be fully autonomous. The solar power system may be remotely monitored and be equipped with automatic diagnostics as well as automatic shut-down and recovery systems. The solar power system includes a circuit breaker and fuse protection and is also equipped with lightning suppression so as to not potentially harm other components within the disclosed system.

In another embodiment, the disclosed camera system includes a zoom control assembly. This assembly moves along a track rail guide that is mounted to the system housing. This feature allows the camera system to incorporate a much larger lens for better zoom capability. The lens is fixed in place, so that the camera body moves to perform zoom operations. Thousands of images may be pieced together to create the gigapixel images. The disclosed system can change zoom levels on the fly so that the system can create one, two, five or ten gigapixel panorama images from the same setup. An example may be taking a smaller resolution panoramic image once a day, a larger one once a week, and huge one once a month. This feature is enabled due to the variable zoom capability of the disclosed embodiments.

An all-weather, remote camera system, not part of the invention, is disclosed. The camera system includes a camera housing. The camera system also includes a camera enclosed by the camera housing. The camera is configured to capture an image or live video. The camera system also includes a storage device to store the image or live video. The camera system also includes a device server configured to instruct the camera to capture the image or live video.

A method for capturing an image, according to the invention, using an all-weather camera system is defined in independent claim 9. The method includes moving a camera to a pre-defined location. The method also includes performing a zoom operation using the camera. The method also includes capturing an image using the camera according to control commands received from a device server. The method also includes uploading the image to a storage device or to an Internet protocol (IP) addressable device.

A method for executing a panorama, not part of the invention, using an all-weather camera system also is disclosed. The method includes acquiring a calibration image. The method also includes setting exposure constraints. The method also includes initiating an image capture sequence according to the exposure constraints and position sequence information using a camera. The method also includes processing at least one image acquired in the image capture sequence using image stitching and blending.

A method for executing a self-repair, not part of the invention, for an all-weather camera system also is disclosed. The method includes monitoring components within the camera system. The method also includes identifying an error condition for a component. The method also includes displaying a code using a LED indicator. The method also includes transmitting diagnostic data from the camera system.

A method for executing a self-repair process, not part of the invention, during a loss of connection to a network from an all-weather camera system also is disclosed. The method includes monitoring a network connector within the camera system. The method also includes identifying a loss of connection to the network. The method also includes archiving at least one image to a data storage device on the camera system. The method also includes restoring the archived image over the network when the connection is re-established.

An all-weather, remote camera system, according to the invention, is defined in independent claim 1. The camera system includes a camera housing engaged to a pan/tilt base and having a lens cover. The camera system also includes a megapixel camera enclosed by the camera housing. The camera is configured to capture an image or video. The camera system also includes a storage device to store the image or video. The camera system also includes a device server configured to instruct the camera to capture the image or video. The camera system also includes a zoom control assembly to move the camera while lens of the camera remains fixed according to the device server. The zoom control assembly includes a track guide rail and a mount sled to move the camera. The lens cover may refer to the front of the camera system, preferably clear. It may protect the camera system and its camera from the elements.

### Brief Description of the Drawings

The accompanying drawings are included to provide further understanding of the disclosed embodiments and constitute a part of the specification. The drawings listed below illustrate embodiments of the claimed invention and, together with the description, serve to explain the principles of the invention, as disclosed by the claims.
Figure 1 illustrates a camera system mounted on a base according to the disclosed embodiments.
Figure 2A illustrates a side view of components within the camera system according to the disclosed embodiments.
Figure 2B illustrates a top view of components within the camera system according to the disclosed embodiments.
Figure 2C illustrates another side view of components within the camera system according to the disclosed embodiments.
Figure 2D illustrates an exploded perspective of view of components within the camera system having a zoom control assembly according the disclosed embodiments.
Figure 2E illustrates a side view of components with the camera system having the zoom control assembly according to the disclosed embodiments.
Figure 2F illustrates a top view of components within the camera system having the zoom control assembly according to the disclosed embodiments.
Figure 2G illustrates another side view of components within the camera system having the zoom control assembly according to the disclosed embodiments.
Figure 3 illustrates a flowchart for a live imaging process according to the disclosed embodiments.
Figure 4 illustrates a flowchart for an archiving process according to the disclosed embodiments.
Figure 5 illustrates a flowchart for a panorama process according to the disclosed embodiments.
Figure 6 illustrates a flowchart for a live video process according to the disclose embodiments.
Figure 7 illustrates a flowchart for a self-repair process for the camera system according to the disclosed embodiments.

### Description of the Preferred Embodiments

Aspects of the invention are disclosed in the accompanying description. It should be noted that like elements disclosed below are indicated by like reference numerals and the drawings.

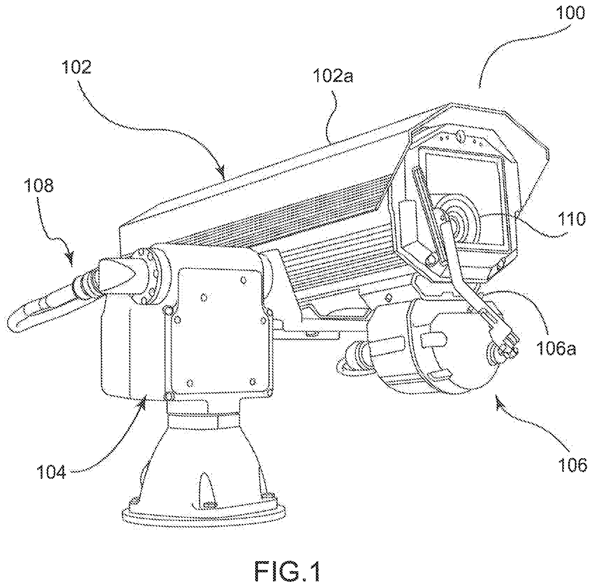

Figure 1 depicts a camera system 100 according to the disclosed embodiments. Camera system 100 preferably is an integrated 16 megapixel high-definition camera and lens assembly comprising an APS-C format complimentary metal-oxide-semiconductor (CMOS) image sensor. Camera system 100 includes a remotely controlled focal length lens having the following features. The image sensor of camera system 100 may have a dimension of approximately 24 by 16 millimeters. More particularly, the disclosed sensor within camera system 100 may have dimensions of about 23.6 millimeters by 15.6 millimeters. Other image sensors may be incorporated into camera system 100 with dimensions known to those skilled in the art.

Camera system 100 may provide images having a resolution of about 4928 by 3264 pixels, or 16 megapixels, with panoramic resolutions of 1 gigapixel and higher. Camera system 100 also may provide images having resolutions of 15, 24, 32 and 64 megapixels. Other resolution values may be implemented and higher resolutions used as capabilities evolve. Camera system 100 includes a lens having zoom capability. The zoom capability may be based on lens selection. For example, camera system 100 may use a zoom capability of 18 millimeters to 300 millimeters and a capability of being mechanically controlled to provide a three times (3x) optical zoom. Camera system 100, however, is not limited to these parameters, and may use any desired zoom capability.

Camera system 100 also provides video compression of images captured during operations. Camera system 100 may incorporate audio-video interleave (AVI), QUICKTIME™ (MOV) or motion JPEG. In some embodiments, the AVI files may contain both audio and video data as well as support multiple streams of audio-video. Camera system 100 also may incorporate automatic features such as ISO film speed, shutter, white balance and focus high dynamic range imaging, as well as creative effects such as architectural miniature, artistic color, sketch, cinematic black and white and the like.

Camera system 100 also may include camera housing 102. Preferably, camera housing 102 includes a sun shield 102a, as shown in Figure 1. Camera housing 102 may be comprised of aluminum and epoxy powdered coated black material. The body of camera system 100 may be constructed from extruded aluminum and die-cast aluminum cover plates. Camera housing 102 is weather proof standard IP 56/IP 57 corrosion/resistant. The weather proof feature of camera system 100 is maintained by two EPDM rubber end gaskets between the cover plates and three cable glands.

Dimensions for camera system 100 including camera housing 102 may be 6.9 inches, or 175 millimeters, (in width) by 6.6 inches, or 168 millimeters, (in height) by 19.4 inches, or 493 millimeters (in length). Camera system 100 may operate in temperatures ranging preferably from about -10° Fahrenheit to about 120° Fahrenheit, or negative 23° Celsius to about 49° Celsius. Camera system 100 may weigh about 14 pounds or 6.35 kilograms, with a pan/tilt unit weight of 12 pounds or 5.4 kilograms (1 inch = 2.54 cm; 100° Fahrenheit = 37.7° Celsius; 1 pound = 0.45 kg). Other dimensions and ranges may be utilized depending environmental factors and desired capabilities.

Pan/tilt unit 104, or otherwise known as precision robotic pan/tilt base, attaches itself to camera housing 102 as shown in Figure 1. Pan/tilt base 104 is a high-performance outdoor pan/tilt assembly designed to provide steady images in windy environments. Pan/tilt base 104 may have a pan range of 360° continuous. In other words, pan/tilt base 104 can move in any direction. Pan/tilt base 104 also may have a tilt range of +45° to -90° from level. The tilt range also may go to +90° in future embodiments. Dimensions for pan/tilt base 104 are preferably 7 inches, or 178 millimeters, (in width) by 10.5 inches, or 274 millimeters (in height) by 6.4 inches, 163 millimeters, (in depth). Pan/tilt base 104 may incorporate other dimensions and capabilities as needed. Pan/tilt base 104 may incorporate a step motor in moving camera system 100 to desired positions.

Camera system 100 may also include remotely controlled wiper and washer kit 106. Window wiper kit 106 includes a wiper 106a and a remote power washer having a remote or time actuation. Window wiper kit 106, therefore, may operate on command or periodically as desired. Window wiper kit 106 may have a 23 liter capacity as well as a remote low fluid alert to indicate the need to replace cleaning fluid. Window wiper kit 106 moves water, debris, dirt, and the like from lens cover 110 so that camera system 100 captures clear images. Preferably, window wiper kit 106 is located underneath camera housing 102, opposite the sun shield. This placement protects window wiper kit 106 from wind and rain.

Camera system 100 also includes network connectors 108. Connectors 108 may be hard wired or wireless connectors. Connectors 108 send and receive signals from a network to camera system 100. Connectors 108 also are all-weather as well.

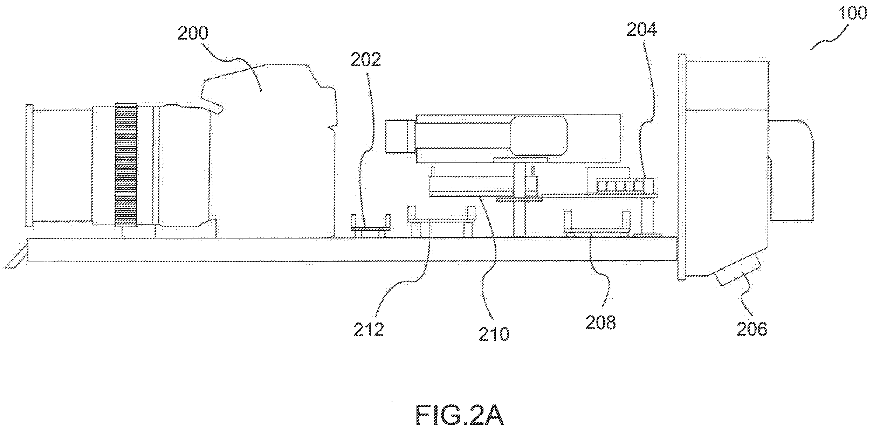

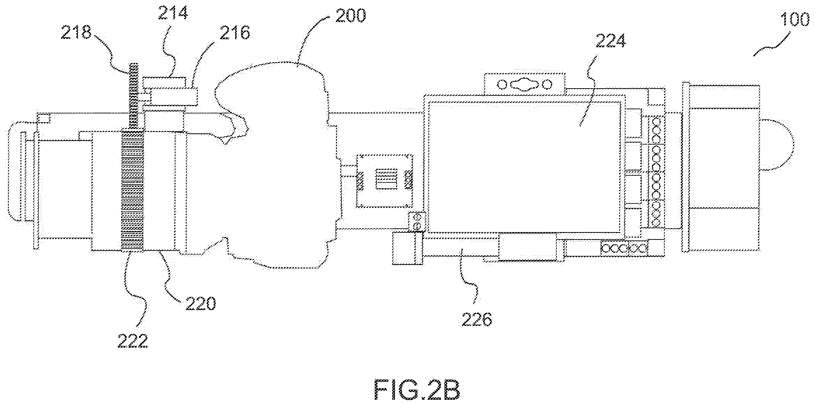

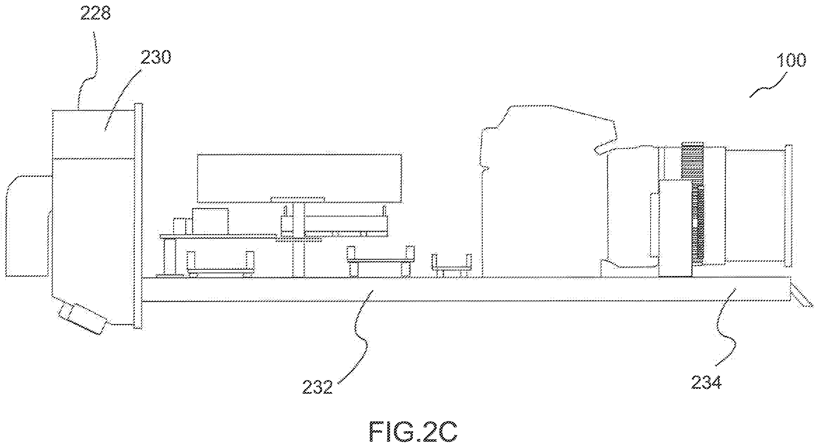

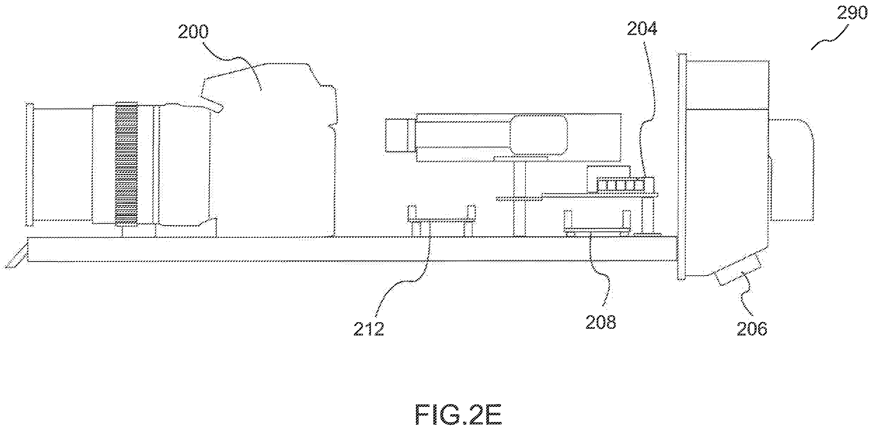

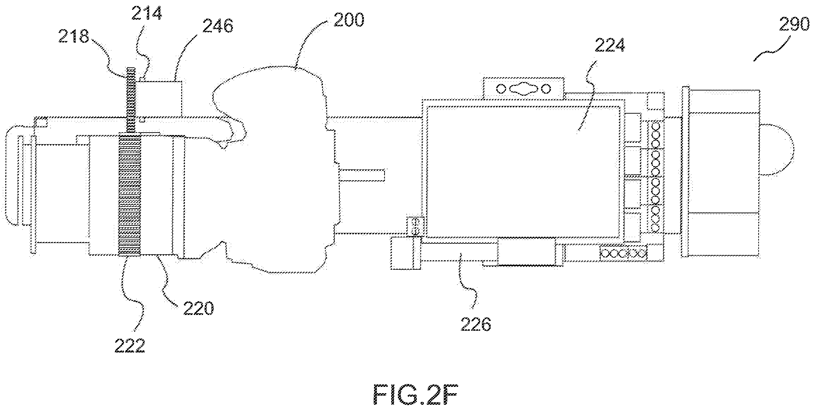

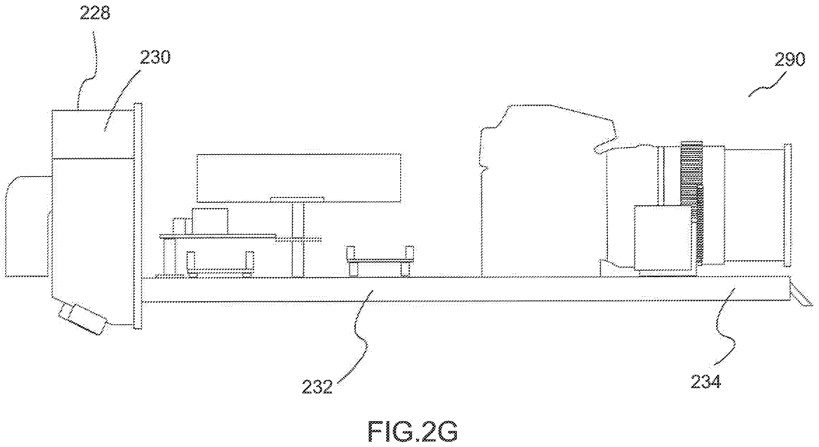

Figures 2A-C depict camera system 100 and the components therein according to the disclosed embodiments. Figure 2A depicts a side view of the components within camera system 100. Figure 2B depicts a top view of the components within camera system 100. Figure 2C depicts an opposite side view of the components within camera system 100. These components are located primarily within camera housing 102 and protected by sun shield 102a shown in Figure 1.

The components disclosed below may reside within camera housing and on camera sled 232. A heater 234 may be located under camera sled 232 to keep camera system 100 functional in cold conditions and to prevent ice buildup. Megapixel camera 200 is located on camera sled 232 at the front of camera system 100. Megapixel camera 200 may be electronically coupled to servomotor control board 202 and relay board 204. Servomotor control board 202 may not be implemented in some embodiments, but is shown here for illustration. Thus, the disclosed embodiments provide a platform for the camera and lens that may be mounted or placed in a variety of locations.

A multi-colored LED status indicator control board 212 is connected to multi-colored LED status indicator 206. Status indicator 206 may receive commands from control board 212 to provide visual information to an operator of the status of camera system 100. Should any component of camera system 100 fail, then status indicator 206 provides an alert, preferably visible outside the camera housing. Thus, should camera system 100 be unable to transmit, the operator may tell from a distance that the camera system needs maintenance upon seeing the LED indicator.

Megapixel camera 200 is also coupled to camera/servo power supply 210. If servomotor control board 202 is not implemented, then camera/servo power supply may be removed in certain embodiments if not needed. Camera/servo power supply 210 provides an operation power of 7.4 volts DC. Camera system 100 may have 230 volts AC available. Housing fan and heater thermostat board 208 may track temperatures and conditions of camera system 100 and activates heater 234 accordingly.

As disclosed in greater detail below, servomotor control board 202 may provide zoom instructions to megapixel camera 200. In this configuration, a remote controlled servomotor 216 is attached to megapixel camera 200. Servomotor 216 is secured by servomotor mounting bracket 214 to fix it to camera sled 232. Instructions are received to have zoom lens 220 adjust itself using gear 218 and gear ring 222 fixed to zoom lens 220. These instructions may be sent by LINUX device server 224 via R5485 communications. Thus, camera system 100 may zoom in and out as desired upon receipt of remote control or programmed instructions from device server 224.

Using servomotor 216, gear 218 rotates to move gear ring 222, which, in turn, moves zoom lens 220 to capture images. Using this zoom capability, multiple images may be captured to generate a gigapixel image. Multiple images can be captured because camera system 100 has the ability to zoom lens 220 into higher focal lengths. This features results in images with increasing resolution. Commands may be received to perform these operations through connectors 108.

Camera system 100 also includes device server 224 and image storage device 226. Device server 224 may store software programs and instructions to operate components within camera system 100. The functionality of these programs is disclosed in greater detail below. The storage devices receive data in the form of images from megapixel camera 200. In the event of a network connection loss, image storage device 226 saves the captured images. Once a connection is reestablished, the images are automatically re-populated over the network to remote storage. These processes are disclosed in greater detail below.

Camera system 100 also includes rear 228 of camera housing 102. A fan 230 may be located in rear 228. Fan 230 may cool down megapixel camera 200 as well as device server 224 and image storage device 226. This feature prevents overheating of the components within camera system 100. Camera system 100 may be configured to turn on fan 230 at a specified temperature. This temperature may be detected by a sensor, or using heater thermostat board 208. Further, rear 228 supports camera sled 232.

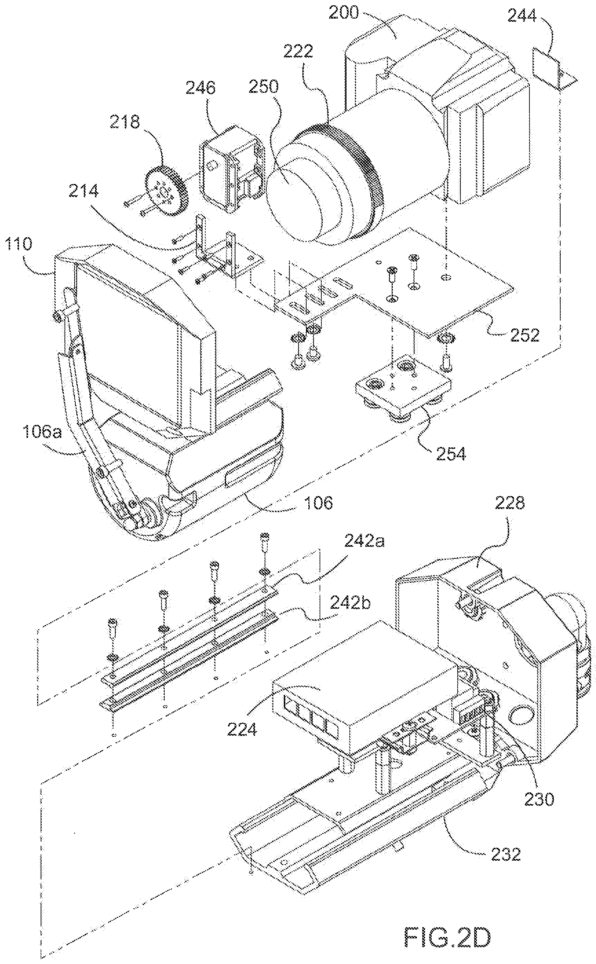

Figures 2D-G depict a camera system 290 having a zoom control assembly according to the disclosed embodiments. The zoom control assembly is configured to move megapixel camera 200 when performing zoom operations. In other words, zoom lens 220 is held in place and does not move to zoom in for an image capture, as the embodiments disclosed in Figures 2A-C. The components of the zoom control assembly are disclosed below.

Camera system 290 is similar to camera system 100, and performs the same functions and operations as camera system 100. Components shown in Figures 2D-G having the same reference numerals as those disclosed above are similar to the components shown in Figures 2A-C, and may perform the same operations. For clarity, their descriptions are not repeated.

Camera system 290 includes zoom control assembly that allows megapixel camera 200 to move within housing 110. The zoom control assembly includes a track rail guide assembly, which is mounted to camera sled 232. The track rail guide assembly comprises linear track rail 242a and track support 242b. Linear track rail 242a may slide along track support 242b.

The zoom control assembly also includes a bracket, or lens lock guide, 244 located against the rear of megapixel camera 200. Lens lock guide 244 may be attached to linear track rail 242a, and moves along with the guide as camera 200 moves during zoom operations. Lens lock guide 244 stops movement backward by megapixel camera 200 so that it does not collide with components in the rear of camera system 290, such as device server 224. Lens lock guide 244 also may help keep megapixel camera 200 in place.

Linear track rail 242a slides backward due to the motion of robotic actuator 246 rotating gear ring 222. The robotic actuator also may be known as a robotic servomotor. Robotic actuator 246 moves to rotate gear ring 222. As gear ring 222 rotates, camera 200 may increase focal length for capturing an image.

Lens 220 remains fixed in place and does not move. Camera front 250 also may remain in place and is adjacent the window of lens cover 110. Thus, with the rotation of gear 218 of robotic actuator 246 against gear ring 222, the lens extension will cause camera 200 to move along track the rail guide assembly.

Megapixel camera 200 is mounted on camera mount sled 252, which is connected to track rail guide 242 by linear carriage 254. Linear carriage 254 engages linear track rail 242a using rollers on the bottom to move in a forward or backward direction. This feature allows movement of camera 200 without any direct contact with the track rail guide assembly. Camera mount sled 252 provides a stable platform as well.

Using these components, the zoom control assembly may eliminate the need for components used in the servomotor embodiment. For example, a servomotor control board and separate servomotor power supply may not be needed. Robotic actuator 246 is connected directly to device server 224. Robotic actuator 246 also works on camera housing 102 power, such as 12 volts direct current (VDC).

Moreover, zoom capabilities are not limited to the space between the lens and the front cover for maneuverability. Limits exist on how far the lens can be from the cover, and if the camera system can still be effective. These limits do not apply to camera system 290. Camera 200 can move within the housing, which allows for the ability to really extend focal length to capture an image. A greater number of more detailed images may be captured for a better defined panoramic image. Camera system 290 may acquire 1000s of images to interleave together for such a shot.

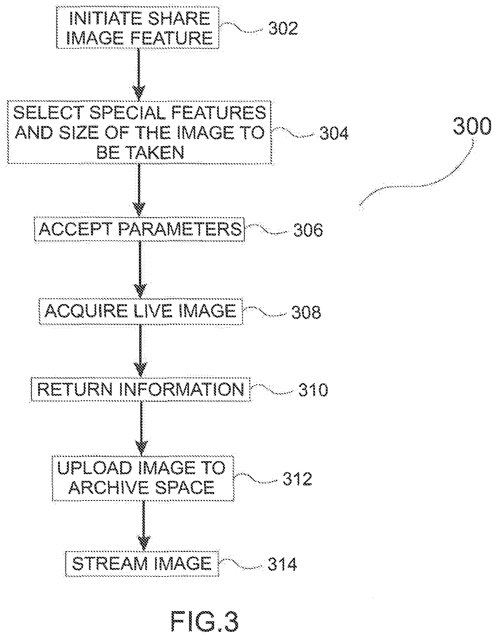

Figures 3-7 show flowcharts for various control processes executed with camera system 100 that may be timed or special event driven. Although camera system 100 is referenced below, camera system 290 also is applicable to perform the processes. The processes may control components of the applicable camera system to perform specific actions. Where applicable, Figures 3-7 prefer back to the components of camera system 100 or camera system 290. The processes, however, are not limited structurally to the components of camera systems 100 and 290, and may include additional features and configurations.

The functionality and steps disclosed below may be performed using instructions stored within device server 224, or provided to camera system 100 from a remote storage via a network accessible by connectors 108. These instructions may be executed to configure the components disclosed above into a special purpose camera system to capture and store images/data.

Figure 3 depicts a flowchart 300 for live image processing a camera system 100 according to the disclosed embodiments. Live image processing may refer to capturing an image in real time upon request. Step 302 executes by initiating the share image feature within camera system 100. A user, or client, may initiate the share image feature. Step 304 executes by selecting from the list of special features. The size of the image to be taken also may be selected by the user in this step.

Step 306 executes by accepting the parameters corresponding to the selected special features and size event image by camera system 100. Step 308 executes by acquiring the live image by megapixel camera 200. Step 310 executes by returning information to a client browser regarding the success or failure of the image capture. For example, the user may be alerted via a web browser that a successful image was taken according to their request.

Step 312 executes by uploading the acquired image to archive space corresponding to the user over a network. Thus, the captured image may be sent via connectors 108 to the user over a network, such as an internet connection. Step 314 executes by streaming the image to the client browser from the network. In other words, the image is uploaded to archive space associated with the user on a dedicated network. This dedicated network may be a private network and the archive space only accessible by the user. The image is then streamed to a web browser for the user from the dedicated network.

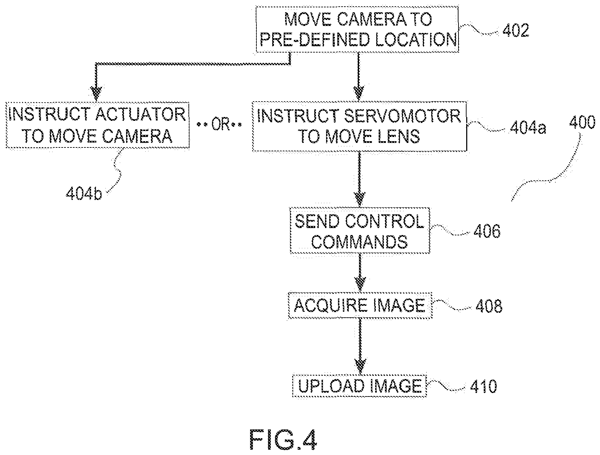

Figure 4 depicts a flowchart 400 for an archiving process of camera system 100 according to the disclosed embodiments. The archiving process may relate to capturing or acquiring an image at a predetermined time or according to a predetermined schedule. Step 402 executes by moving camera system 100 to a pre-defined location. Pan/tilt unit 104 may move camera housing 102 to this location. In some embodiments, camera 200 may be moved within housing 102 to perform zoom operations.

Steps 404a and 404b are executed after step 402. The step executed depends on the configuration of camera system 100. Step 404a executes by instructing zoom, or servo, motor 216 to move zoom lens 220 to a pre-defined zoom position according to the embodiments shown in Figures 2A-C. This instruction may be issued by device server 224 and received as a signal from zoom motor control board 202. Step 404b executes by instructing robotic actuator 246 to move camera 200 according to the embodiments shown in Figures 2D-G. An instruction may be received directly at robotic actuator 246 from device server 224.

Steps 404a or 404b allow camera 200 to move into position to take capture an image at a discrete location. Thus, camera system 100 or 290 may move to specific locations and zoom in to capture these images. Step 406 executes by sending control commands to camera system 100, and more specifically, to megapixel camera 200. Control commands include auto-focus, exposure, and other defined control commands.

Step 408 executes by acquiring the image using megapixel camera 200. The image is acquired according to a control command specified above. These commands may be stored in device server 224. Step 410 executes by uploading the acquired image to server 224 for archival. Thus, an image may be acquired at a set time according to set parameters as instructed by server 224.

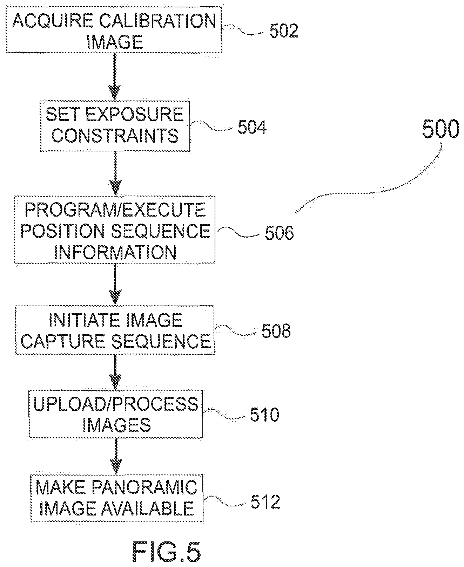

Figure 5 depicts a flowchart 500 for performing a panorama process using camera system 100 according to the disclosed embodiments. A panorama image may be a collection of 100s or 1000s of smaller images taken in precise locations that are then weaved together to form a large image. Examples include skylines, stadiums or nature images. The disclosed embodiments facilitate better panoramic images because the disclosed camera system takes higher definition images than conventional cameras. Using the zoom capabilities disclose above, the disclosed camera system takes a more precise and smaller image that is used in the panoramic image. Smaller and more precise images results in the use of 1000s of images, each clearer and more defined than conventional camera images, for the overall image.

Step 502 executes by acquiring a calibration image of a pre-defined area. Device server 224 may provide instructions to megapixel camera 200 of an area of interest for the panorama. Camera 200 takes the calibration image. Step 504 executes by automatically setting exposure constraints for acquiring the image. Device server 224 may receive instructions over the connected network for taking the panoramic image. For example, the images should not be taken if light is too high or low, or if too much cloudy. These constraints also may be set within camera system 100 and stored in device server 224.

Step 506 executes by programming or executing position sequence information. The position sequence information is sent to pan/tilt base unit 104 and zoom motor control board 202. If camera system 290 is used, then zoom motor control board is not used. Position information may be sent from device server 224 to robotic actuator 246. This information may be used to move camera system 100 to a specific location and zoom in on a target area as requested.

Step 508 executes by initiating an image capture sequence. The image capture sequence may start from top left to bottom right. Exposures are based on the calibration image or, alternatively, may use the setup when camera system 100 was initially configured. Other sequences may be used to capture the images. The capture of an image may be subject to the constraints received or specified above. The sequence may move megapixel camera 100 in a pattern to capture images bordering each other. The initial image, for example, may be taken in the lowest right hand corner of the calibration image. Camera 200 may proceed left until coming to the left side border of the image, and then move upwards. Other embodiments may start in other locations and move in a different pattern. The pattern and instructions for executing the functions to achieve it may be stored on device server 224.

Step 510 executes by uploading or processing the captured images to servers over a network. The images are processed using automated image stitching and blending processes. Images may be stored on image storage device 226, and then placed on the network as a bundle as opposed to streaming the images. For example, the panoramic image may be generated within camera system 100 and sent as a file over the network. Alternatively, the images may be streamed from camera system 100 to another processing device that performs the image stitching and blending processes.

Thus, the applicable camera system 100 or 290 may position camera 200 and zoom to a location to capture an image. Megapixel camera 200 is moved to multiple positions while zooming in to compile a large number of images. Preferably, the number of images is in the 100s or even in the 1000s. A large number of images provides a better quality panoramic image. Such a large number results from the configuration of camera system 100 or 290

Step 512 executes by making the panoramic image available to a user using a panorama player. The panorama player utilizes image tiling to efficiently stream only the viewed high-resolution parts of the panorama image. This feature conserves bandwidth by not processing unneeded images. Thus, the panoramic image may be made available over a web-based network to the user.

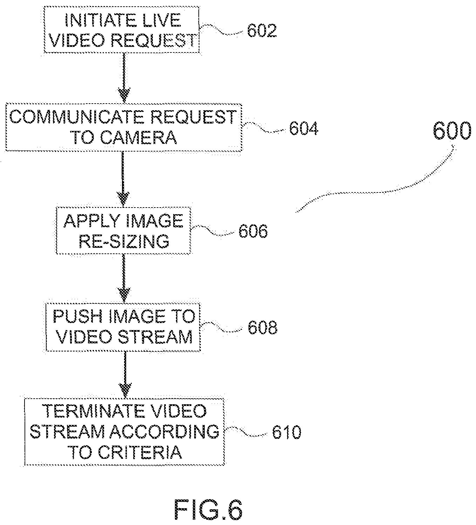

Figure 6 depicts a flowchart 600 for live video processing by camera system 100 according to the disclosed embodiments. Step 602 executes by initiating a live video request from the network. The request may be received via network connectors 108. Preferably, the network is a wireless network. Step 604 executes by communicating this request to megapixel camera 200. Device server 224 may relay the request to camera 200. A live image is requested from the image sensor at a minimum of three frames per second (fps).

Step 606 executes by applying image-resizing if requested, to images. Step 608 executes by pushing the image into a video stream. Captured images by megapixel camera 200 are placed into a video stream directly to a user. Although megapixel camera 200 captures images individually, camera system 100 combines these images according to known formats to provide a video stream. Alternatively, the images may be stored on image storage device 226 for a period before transmitting from camera system 100.

Step 610 executes by terminating the video stream according to set criteria. These criteria may relate to overheating conditions within camera system 100 or if a specified timeout time has been reached. For example, if an overheat condition is sensed within camera system 100, then any video stream may be terminated to prevent damage to camera system 100. As megapixel camera 200 acquires images, it may overheat, especially in hot conditions. Thus, camera system 100 should be shut down before any further damage is done.

Alternatively, the live video stream may be terminated after a certain period, such as 15 minutes, has elapsed. This time period prevents the unneeded utilization of bandwidth over the network or a power drain occurring due to a long and continuous video stream. A user may keep the connection open by sending instructions. Once terminated, live video has to be requested again in order to commence streaming operations. This feature eliminates video connections inadvertently being left open by the user.

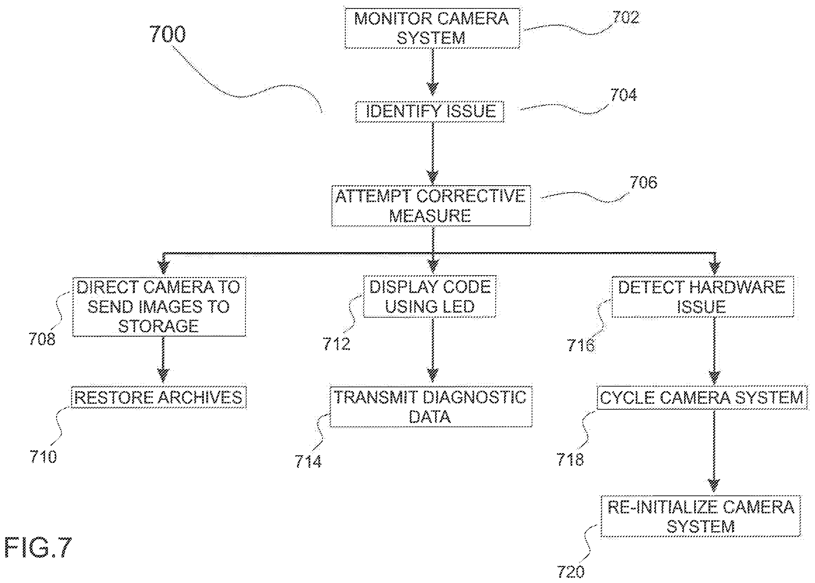

Figure 7 depicts a self-repair process for camera system 100 according to the disclosed embodiments. In some instances, camera system 100 identifies an error condition and takes action. This action may be known as a self-repair process. Afterwards, information may be gathered over the network on the error condition and steps taken to correct it.

Step 702 executes by monitoring camera system 100. The process monitors system vitals such as network loss, slow internet speeds, pant/tile unit (PTU) failure, camera failure, backup memory failure, solar panel data, UPS data and the like. The disclosed process also may monitor window wiper kit 106 for low fluid or errors resulting from obstruction during movement of pan/tilt base unit 104.

Step 704 executes by identifying the issue causing the error condition. The error condition may be related to the programs loaded onto device server 224 to perform operations. Device server 224 may instruct a component to perform an operation, and it does not. Alternatively, device server 224 crashes while running a program. Other error conditions may apply. Step 706 executes by attempting corrective measures, as disclosed below. These corrective measures may be executed separately or in conjunction with each other.

Step 708 executes by directing megapixel camera 200 to send images to image storage device 226 in the event of an internet or network connection loss. Internet loss will direct megapixel camera 200 to send images to on-board storage 226. Upon restoration of the internet or network connection, step 710 executes by restoring the archives of saved images. Camera system 100 may automatically scan the list of images ready for restoration to perform a restore process in between normal archive tasks so as to not disrupt newer archives being created after reconnection. Thus, images are not lost during a lack of connection with the network.

Step 712 executes by displaying a code using LED status indicator 206. Thus, an error code or codes may be displayed using diagnostic LED status indicator 206 located in rear 228 of camera housing 102. LED status indicator 206 may be visible to a user at a distance from camera system 100. LED status indicator 206 may have more than one LED as well. For example, a plurality of LEDs may display different colors during "on" states so that each color represents a different status for camera system 100. Step 714 executes by transmitting the diagnostic data over the network for trouble shooting, if needed.

Step 716 executes by detecting a hardware issue within camera system 100. In this scenario, internet connection is not lost and a problem results from one of the components within camera system 100. Step 718 executes by cycling through the components of camera system 100. Camera system 100 power cycles through the components within using on-board relays, such as relay board 204, to identify faulty components. Further, device server 224 may monitor components within camera system 100 for any of the conditions disclosed above. Sensors and other components may be utilized by device server 224 to receive information about the status of components within camera system 100. Step 720 executes by re-initializing camera system 100.

Thus, camera system 100 provides a capability of viewing actual live video under any conditions and in an around the clock format. Camera system 100 may use picture in picture to view live video, while viewing high definition images. Robotic pan/tilt and zoom control of camera system 100 allows it to move the camera to different locations and different configurations.

Thus, the disclosed embodiments related to a camera system able to operation under severe and remote conditions. The camera system may be placed on top of buildings, monuments and other structures, even those not readily accessible to a user, and provide images and video over a network connection. The camera system includes an assembly to facilitate zooming operations with a megapixel camera. In some embodiments, the camera itself moves backwards to zoom while its lens is held in place. This feature reduces the limits placed on zoom capabilities by moving the lens.

In the event of a disruption of services, the camera system may store images and data at the camera system until service is re-established. Thus, no data is lost during a disconnect condition from a network. The programs and software may reside at the camera system as well, so that, even off-line, the camera system can continue operations.

The disclosed embodiments may be supported and executed on a camera platform that has access to a network. The platform may support software and executable programs to provide the functionality disclosed above, using components such as device server 224. For instance, the software may be deployed. Any software embodying the disclosed functions and processes may be deployed by manually loading directly to the client, server and proxy computers via loading a storage medium such a CD, DVD, flash memory, chip, downloadable program and the like. The software also may be automatically or semiautomatically deployed into the camera system by sending the process software to a central server or a group of central servers. The software is downloaded into the client computers that execute the programs and instructions associated with the software in conjunction with the disclosed camera system.

As will be appreciated by one skilled in the art, the present disclosed embodiments may be embodied as a camera system, method or computer program product installed on the camera system. Accordingly, the present disclosed embodiments may take the form of an entirely hardware embodiment, an entirely software embodiment (including firmware, resident software, microcode, etc.) or an embodiment combining software and hardware aspects that may all generally be referred to herein as a "circuit," "module" or "system." Furthermore, the present disclosed embodiments may take the form of a computer program product embodied in any tangible medium of expression having computer-usable program code embodied in the medium.

Any combination of one or more computer usable or computer readable medium(s) may be utilized to enable device server 224 or image storage device 226. The computer-usable or computer-readable medium may be, for example but not limited to, an electronic, magnetic, optical, electromagnetic, infrared, or semiconductor system, apparatus, device, or propagation medium. More specific examples (a non- exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer- usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory, such as device server 224.

In the context of this specification, a computer-usable or computer-readable medium may be any medium that can contain, store, communicate, propagate, or transport the program for use by or in connection with the instruction execution system, apparatus, or device. The computer- usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, and the like.

Computer program code for carrying out operations of the disclosed embodiments may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The present specification is described with reference to flowchart illustrations and/or block diagrams of methods, apparatus (systems) and computer program products according to the disclosed embodiments. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer or other programmable data processing apparatus to function in a particular manner, such that the instructions stored in the computer-readable medium produce a result including instruction means which implement the function/act specified in the flowchart and/or block diagram block or blocks. Further, these instructions may be used to turn camera system from a general purpose camera system into a special purpose camera system that performs the functions disclosed above.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of camera systems, methods and computer program products according to various embodiments. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The terminology used herein is for the purpose of describing particular embodiments only and is not intended to be limiting. As used herein, the singular forms "a," "an" and "the" are intended to include plural forms as well, unless the context clearly indicates otherwise. It will be further understood that the terms "comprises" and/or "comprising," when used in this specification, specific the presence of stated features, integers, steps, operations, elements, and/or components, but do not preclude the presence or addition of one or more other features, integers, steps, operation, elements, components, and/or groups thereof.

Embodiments may be implemented as a computer process, a computing system or as an article of manufacture such as a computer program product of computer readable media. The computer program product may be a computer storage medium readable by a computer system and encoding a computer program instructions for executing a computer process. When accessed, the instructions cause a processor to enable other components to perform the functions disclosed above.

The description of the present invention has been presented for purposes of illustration and description, but is not intended to be exhaustive or limited in the form disclosed. Many modifications and variations will be apparent to those of ordinary skill without departing from the scope of the invention as defined by the claims. The embodiment was chosen and described in order to best explain the principles of the invention and the practical application, and to enable others of ordinary skill in the art to understand the invention for embodiments with various modifications as are suited to the particular use contemplated.

It will be apparent to those skilled in the art that various modifications and variations can be made in the disclosed all-weather, camera system and method of capturing an image without departing from the scope of the claims.

## Claims

1. An all-weather, remote camera system (100) comprising:
a camera housing (102) comprising a lens cover (110);
a pan/tilt base (104) for moving a camera (200) to a pre-defined location, wherein the camera housing (102) is engaged to the pan/tilt base (104),
a camera (200) comprising a camera body and a lens (220), the camera (200) being enclosed by the camera housing (102), wherein the camera is configured to capture an image, the lens having a mechanically controlled zoom capability;
a camera mount sled (252) on which the camera body is mounted;
a zoom control assembly for moving the camera body of the camera (200) during a zoom operation, the zoom control assembly comprising a track rail guide assembly (242a, 242b) configured to allow the camera body to move within the camera housing (102) during a zoom operation while the lens (220) of the camera (200) remains fixed in close proximity to the lens cover (110) on the camera housing, wherein the camera mount sled (252) is connected to the track rail guide assembly (242a, 242b) by a linear carriage (254);
a storage device (226) to store the image;
a device server (224) configured to instruct the camera (200) to capture the image and to issue an instruction to zoom; and
network connectors (108) configured to send and receive signals from and to a network.

2. The camera system (100) of claim 1, further comprising a control assembly to move a lens (220) of the camera (200).

3. The camera system (100) of claim 2, wherein the control assembly includes a servomotor (216) to rotate a gear ring (222) on the camera (200).

4. The camera system (100) of claim 1, wherein the zoom control assembly further includes a bracket (244) to hold the lens (220) of the camera in place during the zoom operation.

5. The camera system (100) of claim 1, wherein the zoom control assembly includes a robotic actuator (246) to rotate a gear ring (222) on the lens (220) of the camera (200).

6. The camera system (100) of claim 1, further comprising a heater (234) activated by a thermostat board (208).

7. The camera system (100) of claim 1, further comprising a network connector (108) to establish a connection with a network to transmit the image to an Internet protocol (IP) addressable device.

8. The camera system (100) of claim 1, further comprising a LED status indicator (206).

9. A method for capturing an image using an all-weather camera system (100) according to claim 1, the method comprising:
moving a camera (200) to a pre-defined location by means of a pan/tilt base (104) the camera comprising a lens (220) having a mechanically controlled zoom capability and a camera body, the camera (200) being enclosed by the camera housing (102), wherein the camera body is mounted to a camera mount sled (252) being connected to a track rail guide assembly (242a, 242b) of a zoom control assembly by a linear carriage (254), the track rail guide assembly (242a, 242b) being configured to move the camera body of the camera (200) during zoom operation;
performing a zoom operation using the camera according to control commands received from a device server (224), wherein during zoom operation the camera body is allowed to move within the camera housing (102) by track rail guide assembly (242a, 242b) while the lens (220) of the camera (200) remains fixed in close proximity to the lens cover (110) on the camera housing;
capturing an image using the camera (200) according to control commands received from the device server (224);
uploading the image to the device server (224) for archival .

10. The method of claim 9, wherein performing the zoom operation includes instructing a servomotor (216) to rotate the lens (220) of the camera (200).

11. The method of claim 9, wherein performing the zoom operation includes instructing a robotic actuator (246) to rotate the lens (220) of the camera (200).

12. The method of claim 9, wherein performing the zoom operation includes rotating a gear ring (222) on the lens (220) of the camera (200) to perform the zoom operation.

13. The method of claim 11, further comprising archiving the image uploaded to the device server (224) in a storage device (226) .

## Patentansprüche

1. Allwetter-Fernkamerasystem (100), umfassend:
ein Kameragehäuse (102), das eine Objektivabdeckung (110) umfasst;
eine Schwenk-/Neigebasis (104) zum Bewegen einer Kamera (200) zu einer zuvor festgelegten Position, wobei das Kameragehäuse (102) mit der Schwenk-/Neigebasis (104) im Eingriff steht;
eine Kamera (200), die einen Kamerakörper und ein Objektiv (220) umfasst, wobei die Kamera (200) von dem Kameragehäuse (102) umschlossen ist, wobei die Kamera dafür eingerichtet ist, ein Bild aufzunehmen, wobei das Objektiv eine mechanisch gesteuerte Zoomfähigkeit aufweist;
einen Kamerahalterungsschlitten (252), auf dem der Kamerakörper montiert ist;
eine Zoomsteuerungsanordnung zum Bewegen des Kamerakörpers der Kamera (200) während eines Zoomvorgangs, wobei die Zoomsteuerungsanordnung eine Schienenführungsanordnung (242a, 242b) umfasst, die dafür eingerichtet ist, es dem Kamerakörper zu gestatten, sich während eines Zoomvorgangs innerhalb des Kameragehäuses (102) zu bewegen, während das Objektiv (220) der Kamera (200) in unmittelbarer Nähe zu der Objektivabdeckung (110) an dem Kameragehäuse fixiert bleibt, wobei der Kamerahalterungsschlitten (252) durch einen Linearschlitten (254) mit der Schienenführungsanordnung (242a, 242b) verbunden ist;
eine Speichervorrichtung (226) zum Speichern des Bildes;
einen Vorrichtungsserver (224), der dafür eingerichtet ist, die Kamera (200) anzuweisen, das Bild aufzunehmen, und einen Befehl zum Zoomen auszugeben; und
Netzwerkverbinder (108), die dafür eingerichtet sind, Signale zu und von einem Netzwerk zu senden bzw. zu empfangen.

2. Kamerasystem (100) nach Anspruch 1, des Weiteren umfassend eine Steuerungsanordnung zum Bewegen eines Objektivs (220) der Kamera (200).

3. Kamerasystem (100) nach Anspruch 2, wobei die Steuerungsanordnung einen Servomotor (216) zum Drehen eines Zahnkranzes (222) an der Kamera (200) umfasst.

4. Kamerasystem (100) nach Anspruch 1, wobei die Zoomsteuerungsanordnung des Weiteren eine Halterung (244) umfasst, um das Objektiv (220) der Kamera während des Zoomvorgangs an seinem Platz zu halten.

5. Kamerasystem (100) nach Anspruch 1, wobei die Zoomsteuerungsanordnung einen Roboterantrieb (246) zum Drehen eines Zahnkranzes (222) an dem Objektiv (220) der Kamera (200) umfasst.

6. Kamerasystem (100) nach Anspruch 1, des Weiteren umfassend eine Heizung (234), die durch eine Thermostatplatine (208) aktiviert wird.

7. Kamerasystem (100) nach Anspruch 1, das des Weiteren einen Netzwerkverbinder (108) zum Herstellen einer Verbindung mit einem Netzwerk umfasst, um das Bild an eine Internet Protocol (IP)-adressierbare Vorrichtung zu übertragen.

8. Kamerasystem (100) nach Anspruch 1, des Weiteren umfassend eine LED-Statusanzeige (206).

9. Verfahren zum Aufnehmen eines Bildes unter Verwendung eines Allwetter-Kamerasystems (100) nach Anspruch 1, wobei das Verfahren Folgendes umfasst:
Bewegen einer Kamera (200) zu einer zuvor festgelegten Position mittels einer Schwenk-/Neigebasis (104), wobei die Kamera ein Objektiv (220), das eine mechanisch gesteuerte Zoomfähigkeit aufweist, und ein Kameragehäuse umfasst, wobei die Kamera (200) von dem Kameragehäuse (102) umschlossen ist, wobei der Kamerakörper an einem Kamerahalterungsschlitten (252) montiert ist, der durch einen Linearschlitten (254) mit einer Schienenführungsanordnung (242a, 242b) einer Zoomsteuerungsanordnung verbunden ist, wobei die Schienenführungsanordnung (242a, 242b) dafür eingerichtet ist, der Kamerakörper der Kamera (200) während des Zoomvorgangs zu bewegen;
Ausführen eines Zoomvorgangs unter Verwendung der Kamera gemäß von einem Vorrichtungsserver (224) empfangenen Steuerbefehlen, wobei es dem Kamerakörper erlaubt wird, sich dank einer Schienenführungsanordnung (242a, 242b) während des Zoomvorgangs innerhalb des Kameragehäuses (102) zu bewegen, während das Objektiv (220) der Kamera (200) in unmittelbarer Nähe zu der Objektivabdeckung (110) am Kameragehäuse fixiert bleibt;
Aufnehmen eines Bildes unter Verwendung der Kamera (200) gemäß den vom Vorrichtungsserver (224) empfangenen Steuerbefehlen;
Hochladen des Bildes zu dem Vorrichtungsserver (224) zum Zweck der Archivierung.

10. Verfahren nach Anspruch 9, wobei das Ausführen des Zoomvorgangs umfasst, einen Servomotor (216) anzuweisen, das Objektiv (220) der Kamera (200) zu drehen.

11. Verfahren nach Anspruch 9, wobei das Ausführen des Zoomvorgangs umfasst, einen Roboteraktuator (246) anzuweisen, das Objektiv (220) der Kamera (200) zu drehen.

12. Verfahren nach Anspruch 9, wobei das Ausführen des Zoomvorgangs, einen Zahnkranz (222) an dem Objektiv (220) der Kamera (200) zu drehen, um den Zoomvorgang durchzuführen.

13. Verfahren nach Anspruch 11, des Weiteren umfassend, das zu dem Vorrichtungsserver (224) hochgeladene Bild in einer Speichervorrichtung (226) zu archivieren.

## Revendications

1. Système de caméra à distance tous temps (100) comprenant :
un boîtier de caméra (102) comprenant un couvercle d'objectif (110) ;
une base de panoramique/inclinaison (104) permettant de déplacer une caméra (200) vers un emplacement prédéfini, dans lequel le boîtier de caméra (102) est solidarisé avec la base de panoramique/inclinaison (104),
une caméra (200) comprenant un corps de caméra et un objectif (220), la caméra (200) étant entourée par le boîtier de caméra (102), dans lequel la caméra est conçue pour capturer une image, l'objectif possédant une fonctionnalité de zoom à commande mécanique ;
un traîneau de support de caméra (252) sur lequel est monté le corps de caméra ;
un ensemble de commande de zoom permettant de déplacer le corps de caméra de la caméra (200) au cours d'une opération de zoom, l'ensemble de commande de zoom comprenant un ensemble de guidage sur rail de voie (242a, 242b) conçu pour permettre au corps de caméra de se déplacer à l'intérieur du boîtier de caméra (102) au cours d'une opération de zoom, tandis que l'objectif (220) de la caméra (200) reste fixe à proximité immédiate du couvercle d'objectif (110) sur le boîtier de caméra, dans lequel le traîneau de montage de caméra (252) est relié à l'ensemble de guidage sur rail de voie (242a, 242b) par un chariot linéaire (254) ;
un dispositif de stockage d'image (226) destiné à stocker l'image ;
un serveur de dispositif (224) conçu pour donner à la caméra (200) l'instruction de capturer l'image et pour délivrer une instruction de zoom ; et
des connecteurs de réseau (108) conçus pour envoyer et recevoir des signaux depuis et vers un réseau.

2. Système de caméra (100) selon la revendication 1, comprenant en outre un ensemble de commande permettant de déplacer un objectif (220) de la caméra (200).

3. Système de caméra (100) selon la revendication 2, dans lequel l'ensemble de commande comporte un servomoteur (216) permettant de faire tourner une couronne dentée (222) sur la caméra (200).

4. Système de caméra (100) selon la revendication 1, dans lequel l'ensemble de commande de zoom comporte en outre un support (244) destiné à maintenir en place l'objectif (220) de la caméra pendant l'opération de zoom.

5. Système de caméra (100) selon la revendication 1, dans lequel l'ensemble de commande de zoom comporte un actionneur robotisé (246) permettant de faire tourner une couronne dentée (222) sur l'objectif (220) de la caméra (200).

6. Système de caméra (100) selon la revendication 1, comprenant en outre un élément chauffant (234) activé par une carte thermostat (208).

7. Système de caméra (100) selon la revendication 1, comprenant en outre un connecteur de réseau (108) permettant d'établir une connexion à un réseau pour transmettre l'image à un dispositif adressable par protocole Internet (IP, *Internet protocol*)*.*

8. Système de caméra (100) selon la revendication 1, comprenant en outre un indicateur d'état à DEL (206).

9. Procédé permettant de capturer une image à l'aide d'un système de caméra tous temps (100) selon la revendication 1, le procédé comprenant les étapes suivantes :
déplacer une caméra (200) vers un emplacement prédéfini au moyen d'une base de panoramique/inclinaison (104), la caméra comprenant un objectif (220) possédant une fonctionnalité de zoom à commande mécanique et un corps de caméra, la caméra (200) étant entourée par le boîtier de caméra (102), dans lequel le corps de caméra est monté sur un traîneau de montage de caméra (252) qui est relié à un ensemble de guidage sur rail de voie (242a, 242b) d'un ensemble de commande de zoom par un chariot linéaire (254), l'ensemble de guidage sur rail de voie (242a, 242b) étant conçu pour déplacer le corps de caméra de la caméra (200) au cours d'une opération de zoom ;
effectuer une opération de zoom à l'aide de la caméra en fonction d'instructions de commande reçues en provenance d'un serveur de dispositif (224), dans lequel au cours de l'opération de zoom, le corps de caméra peut se déplacer à l'intérieur du boîtier de caméra (102) au moyen de l'ensemble de guidage sur rail de voie (242a, 242b), tandis que l'objectif (220) de la caméra (200) reste fixe à proximité immédiate du couvercle d'objectif (110) sur le boîtier de caméra ;
capturer une image à l'aide de la caméra (200) en fonction d'instructions de commande reçues en provenance du serveur de dispositif (224) ;
télécharger l'image vers le dispositif serveur (224) à des fins d'archivage.

10. Procédé selon la revendication 9, dans lequel la réalisation de l'opération de zoom inclut de donner à un servomoteur (216) l'instruction de faire tourner l'objectif (220) de la caméra (200).

11. Procédé selon la revendication 9, dans lequel la réalisation de l'opération de zoom inclut de donner à un actionneur robotisé (246) l'instruction de faire tourner l'objectif (220) de la caméra (200).

12. Procédé selon la revendication 9, dans lequel la réalisation de l'opération de zoom inclut de faire tourner une couronne dentée (222) sur l'objectif (220) de la caméra (200) pour réaliser l'opération de zoom.

13. Procédé selon la revendication 11, comprenant en outre l'archivage de l'image téléchargée vers le serveur de dispositif (224), dans un dispositif de stockage (226).
